## Europäisches Patentamt

## European Patent Office

## Office européen des brevets

(19)

(11) Veröffentlichungsnummer: **0 163 839**
**B1**

(12) # EUROPÄISCHE PATENTSCHRIFT

(45) Veröffentlichungstag der Patentschrift:
24.02.88

(51) Int. Cl.⁴: **A 47 J 31/54**

(21) Anmeldenummer: **85103879.4**

(22) Anmeldetag: **01.04.85**

(54) **Kaffee- oder Teemaschine.**

(30) Priorität: **24.05.84 DE 3419365**

(43) Veröffentlichungstag der Anmeldung:
**11.12.85 Patentblatt 85/50**

(45) Bekanntmachung des Hinweises auf die Patenterteilung:
**24.02.88 Patentblatt 88/8**

(84) Benannte Vertragsstaaten:
**AT BE CH DE FR GB IT LI LU NL SE**

(56) Entgegenhaltungen:
**DE-A-2 701 692**
**DE-A-2 839 140**
**DE-B-2 530 296**
**DE-U-8 103 143**
**GB-A-2 062 822**

(73) Patentinhaber: **Melitta- Werke Bentz & Sohn,
Ringstrasse 99, D-4950 Minden 1 (DE)**

(72) Erfinder: **Häuslein, Reinhard, Lange Wand 26,
D-4950 Minden (DE)**

(74) Vertreter: **Loesenbeck, Karl- Otto, Dipl.- Ing.,
Jöllenbecker Strasse 164, D-4800 Bielefeld 1 (DE)**

## Beschreibung

Die vorliegende Erfindung betrifft eine Kaffee- oder Teemaschine, bei der Frischwasser im Durchlauf durch eine Heizeinrichtung auf Brühtemperatur erhitzt und durch ein Steigrohr in ein Filtergefäß transportiert wird, wobei die Heizeinrichtung aus mindestens zwei an sich bekannten Durchlauferhitzern besteht, die strömungstechnisch hintereinander liegen.

Eine Kaffee- oder Teemaschine der gattungsgemäßen Art ist aus der DE-A-27 01 692 bekannt.

Hierdurch wird im gewissen Maße schon die Möglichkeit eröffnet, die Heizeinrichtung relativ klein zu bauen und dennoch eine hohe Heizleistung zu verwirklichen.

Der vorliegenden Erfindung liegt die Aufgabe zugrunde, diesen Effekt bei einer Kaffee- oder Teemaschine der gattungsgemäßen Art noch erheblich zu verbessern, das heißt, die Heizleistung der Heizeinrichtung mit einfachen Mitteln noch weiter zu erhöhen.

Diese Aufgabe wird erfindungsgemäß dadurch gelöst, daß die Durchlauferhitzer durch ein in seinem Inneren mit das durchfließende Wasser verwirbelnden Leiteinrichtungen versehenes Leitungsstück miteinander verbunden sind.

Damit wird erreicht, daß das im ersten Durchlaufer-hitzer schon erwärmte Wasser vor dem Einlaufen in den zweiten Durchlauferhitzer vermischt wird, so daß eine gleichmäßigere und damit letztendlich auch schnellere Aufheizung des Wassers auf Brühtemperatur erzielt wird.

Ein Durchlauferhitzer mit einem im Wasserführungsrohr angeordneten Verwirbelungselement ist zwar aus dem DE-U-81 03 143.2 bekannt, allerdings ist hier lediglich ein einziger Durchlauferhitzer beschrieben, bei dem das Verwirbelungselement im Inneren des Wasserführungsrohres des Durchlauferhitzers liegt. Eine Kopplung zweier Durchlauferhitzer über ein mit einem Verwirbelungselement versehenes Leitungsstück ist dem DE-U-81 03 143 nicht zu entnehmen.

Weitere Merkmale der Erfindung sind Gegenstand von Unteransprüchen.

In den beigefügten Zeichnungen sind Ausführungsbeispiele der Erfindung dargestellt, die im folgenden näher beschrieben werden.

Es zeigen:

Fig. 1 eine Seitenansicht einer Kaffee- oder Teemaschine, teilweise im Schnitt dargestellt,

Fig. 2 eine Ansicht in Richtung des Pfeiles II, teilweise im Schnitt gezeigt,

Fig. 3 eine Unteransicht der Heizeinrichtung der Kaffeeoder Teemaschine gemäß dem Pfeil III in Fig. 1,

Fig. 4 eine der Fig. 3 entsprechende Ansicht nach einem weiteren Ausführungsbeispiel der Erfindung,

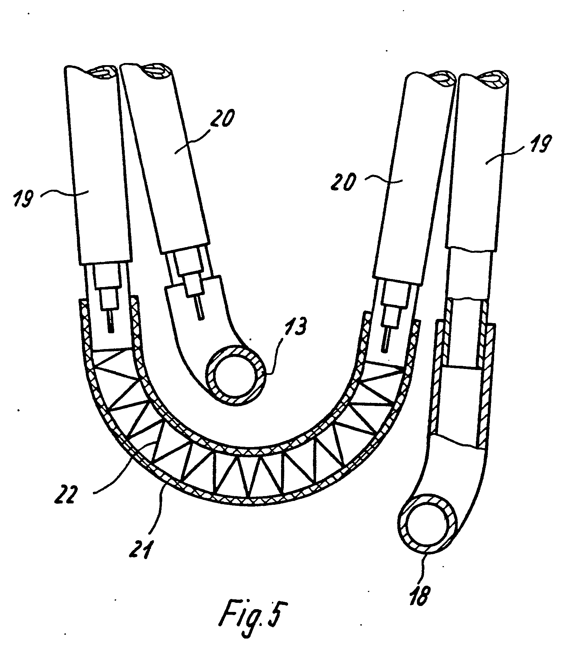

Fig. 5 eine Einzelheit der Heizeinrichtung der Kaffeeoder Teemaschine nach Fig. 1.

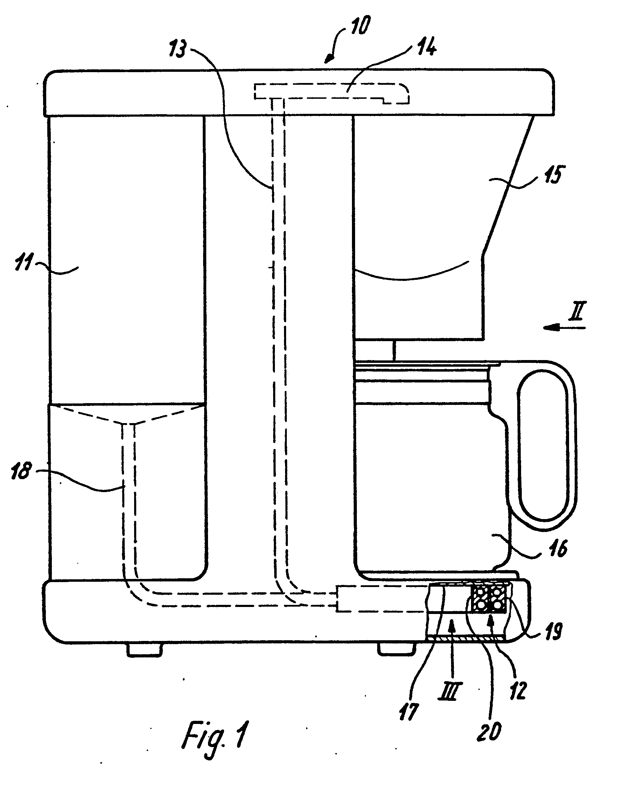

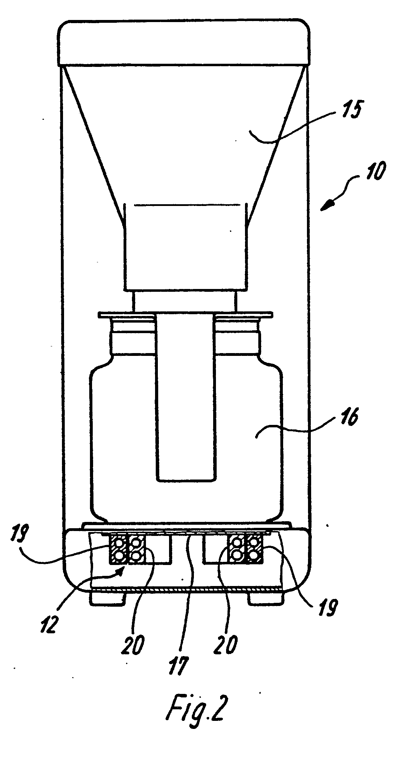

Die in den Fig. 1 und 2 komplett dargestellte und insgesamt mit dem Bezugszeichen 10 versehene Kaffee-oder Teemaschine umfaßt einen Frischwasserbehälter 11, eine Heizeinrichtung 12, ein Steigrohr 13, einen Überlauf 14, ein Filtergefäß 15 sowie eine Kanne 16, die auf ein Warmhalteplatte 17 steht. Der Frischwasserbehälter 11 ist mit der Heizeinrichtung 12 über einen Zulauf 18 verbunden.

Das im Frischwasserbehälter 11 bevorratete Frischwasser wird nach Einschaltung der Heizeinrichtung 12 von dieser Heizeinrichtung 12 erhitzt und über das Steigrohr 13 und den Überlauf 14 in das Filtergefäß 15 gefördert.

Die Heizeinrichtung 12 besteht aus zwei an sich bekannten Durchlauferhitzern 19 und 20. Diese beiden Durchlauferhitzer 19 und 20 sind hintereinander liegend durch ein Leitungsstück 21 miteinander verbunden. Das Leitungsstück 21 ist in seinem Inneren mit Leiteinrichtungen versehen, die das durchfließende Wasser verwirbeln. Die Leiteinrichtungen bestehen bevorzugt aus Schraubenfedern 22 aus rostfreiem Material.

Das Leitungsstück 21 ist im dargestellten Ausführungsbeispiel ein flexibles Schlauchstück, welches auf die Ausgangsseite des einen und die Eingangsseite des anderen Durchlauferhitzers aufgesteckt ist.

Die Durchlauferhitzer 19 und 20 können hinsichtlich ihrer Heizleistung gleich ausgelegt sein, ebenso ist es denkbar, die Heizleistung der beiden Durchlauferhitzer 19 und 20 unterschiedlich groß zu wählen.

Im Falle einer Auslegung mit unterschiedlich großer Heizleistung ist es vorteilhaft, den in Fließrichtung gesehen letzten Durchlauferhitzer 20, der auslaufseitig in das Steigrohr 13 mündet, mit der größeren Heizleistung auszustatten.

Es ist denkbar, die Kaffee- oder Teemaschine 10 schaltungstechnisch so auszubilden, daß wahlweise beide Durchlauferhitzer 19 und 20 oder nur einer der beiden Durchlauferhitzer 10 oder 20 einschaltbar ist.

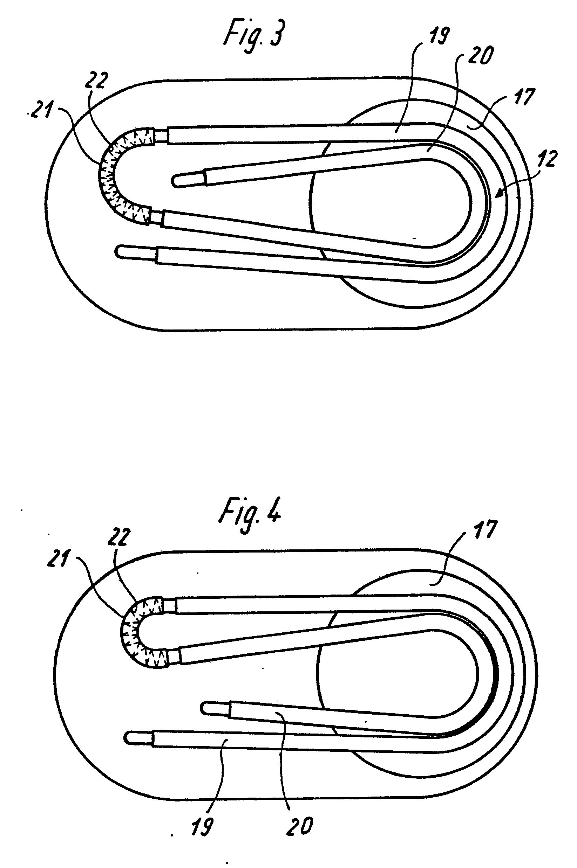

Das Ausführungsbeispiel gemäß Fig. 4 unterscheidet sich von dem Ausführungsbeispiel nach den Fig. 1 bis 3 lediglich dadurch, daß die beiden Durchlauferhitzer 19 und 20 in einer anderen geometrischen Linienführung angeordnet sind. Dieses Beispiel nach Fig. 4 soll lediglich andeuten, daß der Erfindungsgedanke in vielfältiger Weise konstruktiv verwirklicht werden kann.

Wie die Fig. 1 und 2 sehr deutlich zeigen, sind die Durchlauferhitzer 19 und 20 unmittelbar an der Unterseite der Warmhalteplatte 17 installiert. Dies führt dazu, daß die Warmhalteplatte 17 bei eingeschalteten Durchlauferhitzern 19 und 20 mit erwärmt wird.

**Bezugszeichenliste**

| | |
|---|---|
| 10 | Kaffee- oder Teemaschine |
| 11 | Frischwasserbehälter |
| 12 | Heizeinrichtung |
| 13 | Steigrohr |
| 14 | Überlauf |
| 15 | Filtergefäß |
| 16 | Kanne |
| 17 | Warmhalteplatte |
| 18 | Zulauf |
| 19 | Durchlauferhitzer |
| 20 | Durchlauferhitzer |
| 21 | Leitungsstück |
| 22 | Schraubenfedern (Leiteinrichtungen) |

**Patentansprüche**

1. Kaffee- oder Teemaschine, bei der Frischwasser im Durchlauf durch eine Heizeinrichtung auf Brühtemperatur erhitzt und durch ein Steigrohr in ein Filtergefäß transportiert wird, wobei die Heizeinrichtung aus mindestens zwei an sich bekannten Durchlauferhitzern besteht, die strömungstechnisch hintereinander liegen, dadurch gekennzeichnet, daß die Durchlauferhitzer (19,20) durch ein in seinem Inneren mit das durchfließende Wasser verwirbelnden Leiteinrichtungen versehenes Leitungsstück (21) miteinander verbunden sind.

2. Kaffee- oder Teemaschine nach Anspruch 1, dadurch gekennzeichnet, daß die Leiteinrichtungen aus korrosionsfreien heißwasserbeständigen Wirbelelementen, vorzugsweise Schraubenfedern (22), bestehen.

3. Kaffee- oder Teemaschine nach Anspruch 1 oder 2, dadurch gekennzeichnet, daß das Leitungsstück (21) ein flexibles Schlauchstück ist.

4. Kaffee- oder Teemaschine nach einem oder mehreren der vorhergehenden Ansprüche, dadurch gekennzeichnet, daß die Durchlauferhitzer (19, 20) gleich große Heizleistungen aufweisen.

5. Kaffee- oder Teemaschine nach einem der Ansprüche 1 bis 3, dadurch gekennzeichnet, daß die Durchlauferhitzer (19, 20) unterschiedlich große Heizleistungen aufweisen, wobei der Durchlauferhitzer (19 oder 20) mit der größeren Heizleistung ausgangsseitig in ein Steigrohr (13) einmündet.

6. Kaffee- oder Teemaschine nach einem oder mehreren vorhergehenden Ansprüche, dadurch gekennzeichnet, daß die Durchlauferhitzer (19. 20) einzeln einschaltbar sind.

**Claims**

1. Tea or coffee machine, in which fresh water in throughflow through a heating equipment is heated to brewing temperature and through a rising tube is transported into a filter vessel, wherein the heating equipment consists of at least two in themselves known throughflow heaters which in terms of flow technique lie one behind the other, characterised thereby, that the throughflow heaters (19, 20) are connected each with the other by a duct member (21) provided in its interior with guide equipments introducing turbulence into the water flowing through.

2. Tea or coffee machine according to claim 1, characterised thereby, that the guide equipments consist of corrosion-free turbulence-producing elements resistant to hot water and preferably helical springs (22).

3. Tea or coffee machine according to claim 1 or 2, characterised thereby, that the duct member (21) is a flexible hose piece.

4. Tea or coffee machine according to one or more of the preceding claims, characterised thereby, that the throughflow heaters (19, 20) display equally great heating powers.

5. Tea or coffee machine according to one of the claims 1 to 3, characterised thereby, that the throughflow heaters (19, 20) display differently great heating powers, wherein the throughflow heater (19 or 20) with the greater heating power at the outlet side opens into a rising tube (13).

6. Tea or coffee machine according to one or more of the preceding claims, characterised thereby, that the throughflow heaters (19, 20) are switchable on individually.

**Revendications**

1. Machine à faire du café ou du thé, dans laquelle de l'eau d'alimentation se réchauffe à la température d'infusion en passant dans une installation de chauffage et en étant transférée dans un récipient à filtre par un tube montant, installation de chauffage se composant d'au moins deux dispositifs de chauffage à passage, connus en soi, qui sont placés l'un derrière l'autre dans le sens de l'écoulement, caractérisée en ce que les dispositifs de chauffage à passage (19, 20) sont reliés par une pièce de conduite (21) dont l'intérieur est muni d'organes directeurs qui créent un tourbillonnement dans l'eau qui passe.

2. Machine à faire du café ou du thé, selon la revendication 1, caractérisée en ce que les organes directeurs sont constitués par des éléments de tourbillonnement résistant à l'eau chaude et à la corrosion, de préférence des éléments hélicoïdaux (22).

3. Machine à faire du café ou du thé, selon l'une quelconque des revendications 1 ou 2, caractérisée en ce que la pièce de conduite (21) est une pièce de tube souple.

4. Machine à faire du café ou du thé, selon l'une quelconque des revendications 1 à 3, caractérisée en ce que les dispositifs de chauffage par passage (19, 20) ont la même puissance calorifique.

5. Machine à faire du café ou du thé, selon l'une quelconque des revendications 1 à 3, caractérisée en ce que les dispositifs de chauffage par passage (19, 20) ont des puissances calorifiques différentes, le dispositif de chauffage par passage (19 ou 20) ayant la plus grande puissance de chauffage débouchant par sa sortie dans un tuyau montant (13).

6. Machine à faire du café ou du thé, selon l'une quelconque des revendications 1 à 5, caractérisée en ce que les dispositifs de chauffage par passage (19, 20) peuvent être mis en oeuvre séparément.

Fig. 1

Fig.2

Fig. 3

Fig. 4

Fig. 5